# FASCICULE DE BREVET EUROPEEN

(11) **EP 4 415 978 B1**
(45) Date de publication et mention de la délivrance du brevet: **01.04.2026**
(21) Numéro de dépôt: 22802215.8
(22) Date de dépôt: 13.10.2022
(51) Int. Cl.: B60C 11/04, B60C 1/00, B60C 11/13, B60C 11/03, B60C 11/00

(54) **PNEUMATIQUE AVEC UNE BANDE DE ROULEMENT COMPORTANT DES ELEMENTS DE RENFORCEMENT**
REIFEN MIT EINER LAUFFLÄCHE MIT VERSTÄRKUNGSELEMENTEN
TYRE WITH A TREAD COMPRISING REINFORCING ELEMENTS

(30) Priorité: 15.10.2021 FR 2110968
(43) Date de publication de la demande: 21.08.2024
(73) Titulaire: COMPAGNIE GENERALE DES ETABLISSEMENTS MICHELIN, 63000 Clermont-Ferrand (FR)
(72) Inventeur: GORNARD, Benjamin, 63040 Clermont-Ferrand Cedex 9 (FR)
(74) Mandataire: M.F.P. Michelin
(86) Numéro de dépôt international: PCT/FR2022/051924
(87) Numéro de publication internationale: WO 2023/062319

(56) Documents cités:
- EP-B1- 3 478 518
- WO-A1-2020/115412
- FR-A1- 3 104 595
- FR-A3- 3 059 602
- US-A1- 2021 046 783
- US-A1- 2021 046 785

## Description

La présente invention est relative aux pneumatiques, en particulier aux pneumatiques pourvus d'une bande de roulement comprenant deux compositions élastomériques distinctes.

De façon générale, un pneumatique est un objet ayant une géométrie de révolution par rapport à un axe de rotation. Un pneumatique comprend deux bourrelets destinés à être montés sur une jante. Il comprend également deux flancs reliés aux bourrelets, un sommet comportant une bande de roulement destinée à entrer en contact avec le sol, le sommet ayant un premier côté relié à l'extrémité radialement extérieure de l'un des deux flancs et ayant un deuxième côté relié à l'extrémité radialement extérieure de l'autre des deux flancs. La constitution du pneumatique est usuellement décrite par une représentation de ses constituants dans un plan méridien, c'est-à-dire un plan contenant l'axe de rotation du pneumatique. Les directions radiale, axiale et circonférentielle désignent respectivement les directions perpendiculaires à l'axe de rotation du pneumatique, parallèle à l'axe de rotation du pneumatique et perpendiculaire à tout plan méridien. Dans ce qui suit, les expressions « radialement », « axialement » et « circonférentiellement » signifient respectivement « selon une direction radiale », « selon la direction axiale » et « selon une direction circonférentielle » du pneumatique. Les expressions « radialement intérieur, respectivement radialement extérieur » signifient « plus proche, respectivement plus éloigné, de l'axe de rotation du pneumatique, selon une direction radiale ». Le plan équatorial CP est un plan perpendiculaire à l'axe de révolution du pneumatique, positionné axialement de façon à couper la surface de la bande de roulement sensiblement à mi-distance des bourrelets. Les expressions « axialement intérieur, respectivement axialement extérieur » signifient « plus proche, respectivement plus éloigné, du plan équatorial du pneumatique, selon la direction axiale ».

Comme on le sait, les pneumatiques pour applications routières, et tout particulièrement les pneumatiques pour véhicules de tourisme, apportent une contribution essentielle aux performances des véhicules en matière de résistance au roulement (et donc d'efficacité énergétique des véhicules), d'adhérence, de réponse dynamique pour le guidage des véhicules (notamment en virage) et d'usure (et donc de coût global d'utilisation des véhicules).

Pour améliorer le compromis de performances que sont la résistance au roulement et la réponse en poussée de dérive sur sollicitation de braquage du véhicule, on utilise un matériau peu hystérétique et qui permet de rigidifier la bande de roulement. Usuellement, les rigidités sont modestes pour ne pas trop s'opposer à la mise à plat de la bande de roulement du pneumatique dans l'aire de contact avec le sol. Cependant, plus la rigidité est faible, moins bonne est la réponse en poussée de dérive du pneumatique sur sollicitation de braquage du véhicule. Actuellement, même dans les variantes de rigidités les plus élevées, le module dynamique de cisaillement G* des matériaux de sous-couche ou de renforcement de la bande de roulement de l'art antérieur est en général très inférieur à 8 MPa, même lorsque l'on recherche les meilleures performances en comportement. Dans la présente, précisons que le module dynamique de cisaillement G* considéré est le module dynamique de cisaillement G* mesuré à 23°C, et sous une contrainte de cisaillement alterné à une fréquence de 10 Hz et à 5% de déformation, sauf indication contraire. Ce descripteur mesure la rigidité aux faibles déformations.

Pour répondre à l'amélioration de ces performances antinomiques, les manufacturiers de pneumatiques élaborent des bandes de roulement de plus en plus complexes, en proposant par exemple des bandes de roulement comportant des compositions élastomériques différentes.

A titre d'illustration, on peut citer le document WO2016/174100 qui décrit une bande de roulement comprenant un mélange caoutchouteux de bande de roulement de faible dureté, et qui est renforcée par l'inclusion d'un ou plusieurs éléments de renforcement circonférentiels ayant une forme triangulaire, vue en coupe méridienne, ledit triangle ayant sa pointe orientée radialement vers l'extérieur ; ces éléments de renforcement circonférentiels étant notamment plus rigides que le mélange caoutchouteux de la bande de roulement. Cette bande de roulement complexe permet d'obtenir un bon compromis entre la résistance au roulement et la réponse dynamique pour le guidage des véhicules.

On peut aussi citer les documents FR3104595, EP3478518, US2021/046785 et FR3059602 décrivant également un pneumatique dont la bande de roulement comprend au moins un bloc de sculpture comportant au moins un élément de renforcement circonférentiel constitué d'une composition ayant une rigidité différente de la composition constituant la bande de roulement.

Le document WO2020115412 décrit un pneumatique pour avion dont la bande de roulement comprend une partie médiane et deux parties latérales positionnées axialement de part et d'autre de la partie médiane. La composition de caoutchouc de la partie médiane comprend notamment de 25 à 85 pce d'un copolymère butadiénique et styrènique fonctionnalisé à l'étain et de 15 à 75 pce d'élastomère isoprénique et la composition de caoutchouc de la partie latérale est différente de la composition de caoutchouc de la partie médiane ; cette bande de roulement permettant notamment d'augmenter la résistance à l'usure lors des phases d'atterrissage.

Le document US2021/046783 décrit un pneumatique dont la bande de roulement comprend des rainures et des blocs, les rainures comprenant un renfort de rainure fait d'une composition de caoutchouc dont la formulation est différente de celle formant la partie de la bande de roulement entrant en contact avec le sol. Ce document ne décrit pas une bande de roulement dont les blocs de sculpture comportent au moins un élément de renforcement circonférentiel constitué d'une composition de caoutchouc spécifique.

Toutefois, il existe toujours un besoin d'améliorer encore plus la sécurité des usagers de véhicules en leur fournissant des pneumatiques ayant une bonne réponse dynamique, sans pénaliser la résistance au roulement.

L'utilisation de compositions élastomériques présentant des rigidités élevées aux faibles déformations pour améliorer la réponse dynamique du pneumatique n'est pas sans poser des problèmes aux manufacturiers.

En effet, il est difficile d'obtenir des compositions élastomériques avec des niveaux de rigidité élevés aux faibles déformations, tout en maintenant le niveau d'hystérèse à des niveaux assez faibles, et ce sans dégrader significativement les propriétés limites de ces compositions.

Une solution pour résoudre ce problème consiste à augmenter le taux de charges renforçantes dans les compositions de caoutchouc. Toutefois, cette solution entraine une augmentation de l'hystérèse. Elle est donc défavorable pour la résistance au roulement. Une autre solution consiste à augmenter le taux d'agent de réticulation mais on observe alors que la cohésion de la composition diminue. Les propriétés limites étant fortement impactées, la composition élastomérique est moins résistante à la fissuration.

Une autre solution consiste à utiliser un noir de carbone dit fin (c'est à dire ayant une surface spécifique STSA supérieure ou égale à 70 m²/g) pour obtenir des compositions élastomériques de plus fortes rigidités. Toutefois cette solution s'accompagne d'une hausse significative de l'hystérèse de ces compositions. Cette solution est donc également défavorable pour la résistance au roulement.

Les concepteurs de pneumatiques sont donc constamment à la recherche d'une solution permettant de faire évoluer le compromis de propriétés existant en améliorant au moins une propriété du pneumatique, sans pour autant pénaliser les autres.

Il existe donc toujours un besoin d'améliorer le compromis de performance rigidité/ hystérèse/ cohésion d'une composition élastomérique, notamment pour obtenir un pneumatique présentant une bonne réponse dynamique sans pénalisation de sa résistance au roulement.

La Demanderesse s'est fixée pour objectif de répondre à ce besoin et de fournir une composition élastomérique qui puisse être utilisée dans des éléments de renforcement circonférentiels d'une bande de roulement.

Ainsi, l'invention a pour objectif d'apporter une meilleure réponse dynamique en poussée de dérive sur sollicitation de braquage sans pénaliser la résistance au roulement du pneumatique, en substituant le matériau des éléments circonférentiels de l'art antérieur par une composition de caoutchouc spécifique.

L'invention a donc pour objet un pneumatique, ayant un côté extérieur et un côté intérieur, ledit pneumatique comprenant une armature de sommet et une bande de roulement radialement extérieure, ladite bande de roulement comprenant une pluralité de blocs de sculpture orientés au moins en partie circonférentiellement et une pluralité de rainures s'étendant au moins en partie circonférentiellement, chaque rainure circonférentielle étant délimitée par une face latérale axialement interne, par une face latérale axialement externe et par un fond de rainure, au moins un desdits blocs de sculpture comportant au moins un élément de renforcement circonférentiel constitué d'une composition ayant un module dynamique de cisaillement G* au moins deux fois supérieur au module dynamique de cisaillement G* de la composition du reste des blocs de la bande de roulement, l'élément de renforcement circonférentiel ayant une largeur axiale qui diminue progressivement en se déplaçant radialement vers l'extérieur, ladite largeur axiale ayant une valeur maximale inférieure à 40% de la largeur axiale dudit bloc, caractérisé en ce que la composition dudit élément de renforcement circonférentiel est à base d'au moins un élastomère diénique, une charge renforçante comprenant un noir de carbone présentant une surface spécifique STSA mesuré selon la norme D6556-2016 supérieure ou égale à 90 m²/g, une résine époxyde, un agent durcisseur aminé et un système de réticulation.

Par rapport aux éléments renforcements circonférentiels de l'art antérieur, ceux de la présente invention, grâce à leur composition élastomérique spécifique, présentent une meilleure rigidité aux faibles déformations tout en conservant des propriétés d'hystérèse basses. En outre, ils présentent une meilleure cohésion du matériau, grâce aux propriétés limites de la composition qui ont été améliorées.

### I- DÉFINITIONS

Par l'expression « composition à base de », il faut entendre une composition comportant le mélange et/ou le produit de réaction in situ des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Par l'expression « partie en poids pour cent parties en poids d'élastomère » (ou pce), il faut entendre au sens de la présente invention, la partie, en masse pour cent parties en masse d'élastomère.

Dans la présente, sauf indication expresse différente, tous les pourcentages (%) indiqués sont des pourcentages (%) en masse.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

Lorsqu'on fait référence à un composé « majoritaire », on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un élastomère majoritaire est l'élastomère représentant la plus grande masse par rapport à la masse totale des élastomères dans la composition. De la même manière, une charge dite majoritaire est celle représentant la plus grande masse parmi les charges de la composition. A titre d'exemple, dans un système comprenant un seul élastomère, celui-ci est majoritaire au sens de la présente invention ; et dans un système comprenant deux élastomères, l'élastomère majoritaire représente plus de la moitié de la masse des élastomères. Au contraire, un composé « minoritaire » est un composé qui ne représente pas la fraction massique la plus grande parmi les composés du même type. De préférence par majoritaire, on entend présent à plus de 50%, de préférence plus de 60%, 70%, 80%, 90%, et plus préférentiellement le composé « majoritaire » représente 100%.

La « sculpture » d'une bande de roulement est un système plus ou moins complexe d'éléments en relief séparés les uns des autres par des découpures. Les éléments en relief d'une sculpture peuvent être soit des nervures soit des blocs.

Une « nervure » (« rib » en anglais), est un élément en relief formé sur une bande de roulement et s'étend essentiellement selon la direction circonférentielle, cet élément étant délimité soit par deux découpures, soit par une découpure et un bord de la bande de roulement. Une nervure comprend deux parois latérales et une face de contact, cette dernière étant destinée à venir en contact avec la chaussée pendant le roulage. Cet élément s'étend dans la direction circonférentielle et fait le tour du pneumatique.

Un « bloc » (« tread block » en anglais), est un élément en relief formé sur une bande de roulement, cet élément étant délimité par une ou plusieurs découpures rectilignes, incurvées ou circulaires, et éventuellement par un bord de la bande de roulement. Un bloc comprenant également une face de contact, cette dernière étant destinée à venir en contact avec la chaussée pendant le roulage.

Les découpures (« cut out » en anglais) peuvent être soit des rainures, soit des incisions selon leur largeur, c'est-à-dire la distance entre les parois de matière qui les délimitent et leur fonctionnement lors du roulage. La largeur d'une rainure est typiquement au moins égale à 2 mm, alors que la largeur d'une incision est typiquement au plus égale à 2 mm. Lors du roulage du pneumatique, les parois de matière d'une rainure n'entrent pas en contact l'une avec l'autre, alors que les parois de matière d'une incision entrent en contact au moins en partie l'une avec l'autre.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Evidemment, les composés mentionnés peuvent également provenir du recyclage de matériaux déjà utilisés, c'est-à-dire qu'ils peuvent être, partiellement ou totalement, issus d'un procédé de recyclage, ou encore obtenus à partir de matières premières elles-mêmes issues d'un procédé de recyclage. Sont concernés notamment les polymères, les plastifiants, les charges, etc. »

Toutes les valeurs de température de transition vitreuse « Tg » décrite dans la présente sont mesurées de manière connue par DSC (Differential Scanning Calorimetry) selon la norme ASTM D3418 (1999).

### II- BREVE DESCRIPTION DES FIGURES

La figure 1 [Fig.1] montre une coupe méridienne partielle et schématique d'un pneumatique conforme à un mode de réalisation de l'invention.
La figure 2 [Fig.2] montre une coupe méridienne partielle et schématique d'un pneumatique conforme à un autre mode de réalisation de l'invention.
La figure 3 [Fig.3] montre une coupe méridienne partielle et schématique d'un pneumatique conforme à un autre mode de réalisation de l'invention.
La figure 4 [Fig.4] montre une coupe méridienne partielle et schématique d'un pneumatique conforme à un autre mode de réalisation de l'invention.
La figure 5 [Fig.5] montre une coupe méridienne partielle et schématique d'un pneumatique conforme à un autre mode de réalisation de l'invention.
La figure 6 [Fig.6] montre une coupe méridienne partielle et schématique d'un pneumatique conforme à un autre mode de réalisation de l'invention.
La figure 7 [Fig.7] montre une coupe méridienne partielle et schématique d'un pneumatique conforme à un autre mode de réalisation de l'invention.
La figure 8 [Fig.8] montre en en coupe méridienne, des variantes de réalisation d'un élément de renforcement circonférentiel utilisables dans le cadre de l'invention.

### III- DESCRIPTION DE L'INVENTION

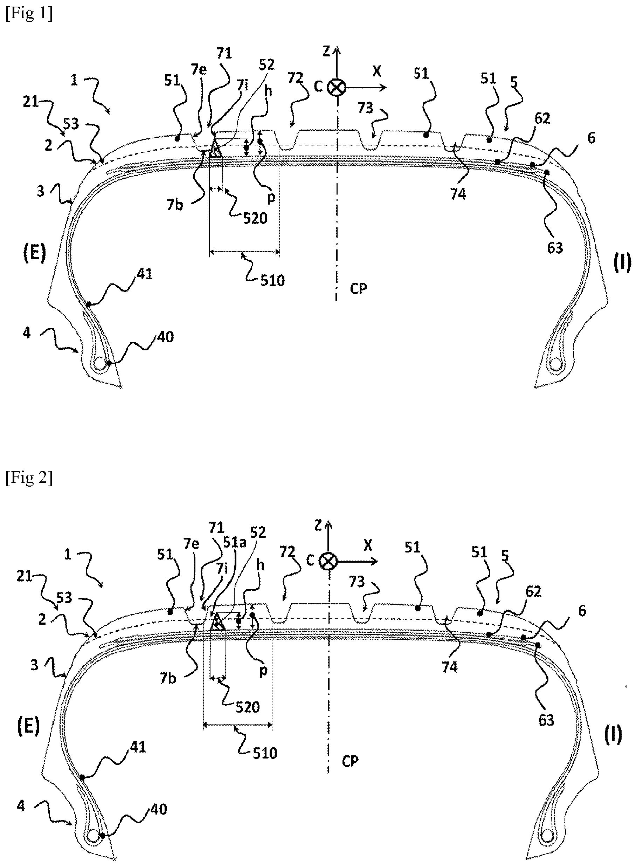

On voit à la figure 1 [Fig. 1] un pneumatique 1, ayant un côté extérieur E et un côté intérieur I, le pneumatique comprenant un sommet 2, deux flancs 3 reliés chacun à un bourrelet 4. Le sommet 2 est relié de chaque côté à l'extrémité radialement extérieure de chacun des deux flancs. Le sommet 2 comporte une bande de roulement 5. La figure 1 [Fig.1] montre un plan équatorial CP, plan perpendiculaire à l'axe de rotation du pneumatique, situé à mi-distance des deux bourrelets 4 (montés sur jante) et passant par le milieu de l'armature de ceinture ; la figure 1 [Fig.1] indique aussi, par des flèches disposées juste au-dessus de la bande de roulement 5, sur le plan équatorial CP, les directions axiale X, circonférentielle C et radiale Z.

Par convention, le côté extérieur E du pneumatique est la partie axialement externe du pneumatique destinée à être visible depuis l'extérieur du véhicule une fois monté et le côté intérieur I est la partie axialement externe du pneumatique orientée vers le châssis du véhicule une fois monté.

Chaque bourrelet comporte une tringle 40. Une nappe de carcasse 41 est enroulée autour de chaque tringle 40. La nappe de carcasse 41 est radiale et est, de manière connue en soi, constituée par des câbles ; dans ce cas de mise en œuvre, il s'agit de câbles textiles ; ces câbles sont disposés sensiblement parallèlement les uns aux autres et s'étendant d'un bourrelet à l'autre de façon telle qu'ils forment un angle compris entre 80° et 90° avec le plan équatorial CP.

La bande de roulement 5 comprend une pluralité de blocs de sculpture 51. Deux blocs de sculpture 51 axialement adjacents sont séparés par une rainure 71, 72, 73, 74 s'étendant au moins en partie circonférentiellement. Chaque rainure circonférentielle 71, 72, 73, 74 est délimitée par une face latérale axialement interne 7i, par une face latérale axialement externe 7e et par un fond 7b de rainure.

Avantageusement, la bande de roulement comprend au moins trois, de préférence de trois à cinq blocs, blocs de sculpture 51 et par conséquent au moins deux, de préférence de deux à quatre, rainures 71, 72, 73, 74.

Le sommet 2 comporte une armature de sommet 6 comportant deux nappes de ceinture 62, 63 ; le sommet 2 comporte aussi une nappe de carcasse 41. De façon très classique, les nappes de ceinture 62, 63 sont formées par des câbles métalliques arrangés parallèlement entre eux. De façon bien connue, les éléments de renforcement que forment les câbles de la nappe de carcasse 41 et les câbles des nappes de ceinture 62, 63 sont orientés selon au moins trois directions différentes de façon à former une triangulation.

L'armature de sommet 6 pourrait aussi comporter une nappe de frettage constituée de renforts de frettage formé par des fibres organiques ou polyamide aromatique, formant, avec la direction circonférentielle un angle au plus égal à 5°. L'armature de sommet 6 pourrait aussi comporter d'autres renforts, orientés d'un angle plus proche de 90° ; la constitution de l'armature de sommet ne fait pas partie de l'invention et dans le présent mémoire, lorsque l'on fait référence à la surface radialement extérieure de l'armature de ceinture, on vise le niveau radialement le plus extérieur de la couche de fils ou câbles de renforcement radialement la plus à l'extérieur, y compris la fine couche de mélange de calandrage des fils ou câbles de renforcement s'il y a une telle couche.

L'un des blocs de sculpture 51 comporte aussi un élément de renforcement circonférentiel 52. Cet élément de renforcement circonférentiel 52 est constitué d'un mélange caoutchouteux de rigidité au moins deux fois supérieure à la rigidité du mélange caoutchouteux du reste des blocs de la bande de roulement. Avantageusement, la composition du reste des blocs de la bande de roulement de la bande de roulement a un module dynamique de cisaillement G* mesuré à 60°C à 10 Hz et sous une contrainte de cisaillement alternée de 0,7 MPa inférieur ou égal à 2,5 MPa, de préférence inférieur à 1,3 MPa, de préférence encore inférieur à 1,1 MPa. A titre d'exemple de composition du reste de la bande de roulement, on peut citer une composition comprenant 100 pce d'un SBR (avec 27% styrène, et en pourcentage de la partie butadiénique du copolymère 5% de butadiène -1,2, 15% de cis-1,4, 80% de trans -1,4 ; Tg -48°C), 100 pce de silice « Zeosil1165MP » de la société Solvay, 9 pce de silane TESPT « SI69 » de la société Evonik, 20 pce d'huile TDAE « Flexon 630 » de la société Shell, 50 pce de résine « Escorez 2173 » de la société Exxon, 5 pce de noir de carbone et 12 pce d'additifs (système de protection et de vulcanisation) habituellement utilisés dans des compositions de bandes de roulement.

La composition de l'élément de renforcement circonférentiel 52 sera décrite plus en détail ci-après.

L'élément de renforcement circonférentiel 52 s'étend radialement de la surface radialement extérieure de ladite armature de sommet 6 vers la surface de ladite bande de roulement avec une largeur axiale qui diminue progressivement en se déplaçant radialement vers l'extérieur et au maximum sur une hauteur « h » correspondant à 75% de l'épaisseur « p » de la bande de roulement. L'épaisseur « p » de la bande de roulement est mesurée radialement entre l'extrémité radialement extérieure de l'armature de sommet 6 et la surface de contact avec le sol de la bande de roulement 5.

L'élément de renforcement circonférentiel 52 est de largeur axiale ayant une valeur maximale 520, au niveau de la jonction avec l'armature de sommet 6, inférieure à 30% de la largeur axiale 510 dudit bloc, mesurée où les parois latérales de rainure rencontrent le fond de rainure. On consultera en particulier la figure 1 [Fig.1].

L'élément de renforcement circonférentiel 52, du fait de ses propriétés de rigidité, s'oppose au basculement et au cisaillement de la nervure formée par le bloc 51 pourvu d'un tel élément de renforcement circonférentiel 52, sans provoquer de poussée parasite orientée axialement. Cela permet de conserver à la bande de roulement une surface de contact avec le sol de roulage importante, de limiter les surpressions sur le bord d'attaque de la nervure ou des blocs de sculpture et ainsi de limiter les échauffements ainsi que l'usure rapide du bord d'attaque de la nervure. La présence de l'élément de renforcement permet de rigidifier en cisaillement axial les blocs de sculpture et in fine permet une amélioration de la rigidité de dérive du pneu et donc de la tenue de route du véhicule. Ainsi la présence de l'élément de renforcement circonférentiel 52 permet d'utiliser pleinement les capacités d'adhérence d'un mélange caoutchouteux de bande de roulement de très faible rigidité (c'est-à-dire à des mélanges caoutchouteux de la bande de roulement ayant généralement un module dynamique de cisaillement G* mesuré à 60°C à 10 Hz et sous une contrainte de cisaillement alternée de 0,7 MPa inférieur ou égal à 2,5 MPa, de préférence inférieur à 1,3 MPa, de préférence encore inférieur à 1,1 MPa).

L'homme du métier, concepteur de pneumatiques pourra adapter le nombre et la position des éléments de renforcement circonférentiel pour obtenir une résistance optimale aux basculement et cisaillement des nervures et blocs de sculpture.

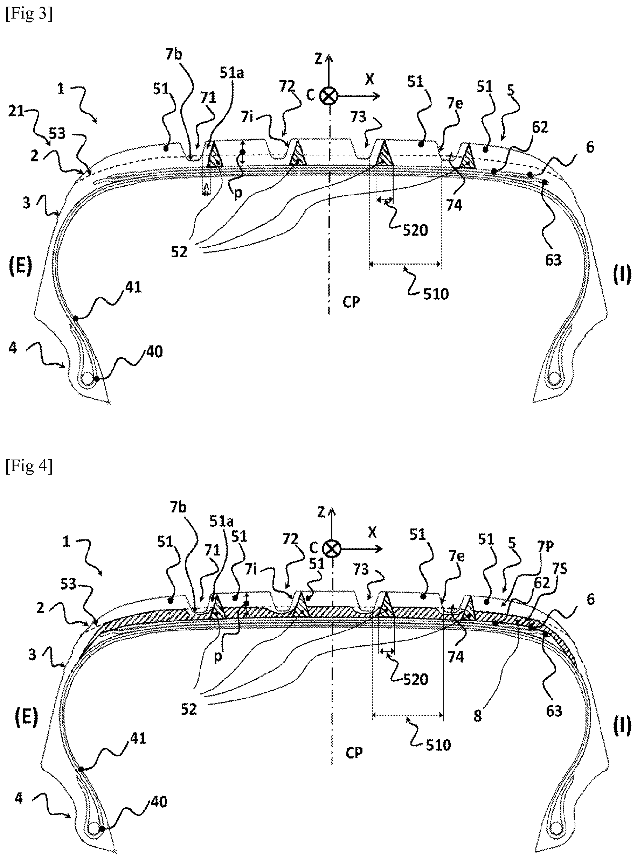

De préférence, la majorité des blocs ou l'ensemble des blocs 51 est pourvu d'au moins un élément de renforcement circonférentiel 52 comme montré aux figures 3 à 7 [figures 3 à 7].

De manière particulièrement avantageuse, l'élément de renforcement circonférentiel 52 forme au moins en partie la face latérale axialement interne 7i ou une face radialement externe 7e dudit au moins un desdits blocs de sculpture 51. En d'autres termes, avantageusement, au moins une partie de face radialement interne ou externe d'au moins une rainure 71, 72, 73, 74 est constituée par un élément de renforcement circonférentiel 52. Les figures 2 à 6 [figures 2 à 6] illustrent des exemples de mise en œuvre de l'invention dans lesquels un recouvrement 51a, réalisé par le même mélange caoutchouteux que le reste des blocs de la bande de roulement, est interposé axialement entre rainure 71 et élément de renforcement circonférentiel 52. En consultant en particulier la figure 3 [Fig.3], on voit que ledit recouvrement 51a s'étend axialement sur une largeur axiale « A » comprise préférentiellement entre 4 % et 15 % de la largeur axiale 510 dudit bloc ; le recouvrement 51a et la largeur axiale A ne sont pas identifiés à tous les endroits de la figure 3 [Fig.3] où il y a un renforcement circonférentiel 52 pour ne pas surcharger cette figure, de même que cet aspect n'est pas systématique identifié par ces références sur les autres figures mais soulignons le caractère générique de cet aspect, valable pour tous les modes de réalisation de l'invention présentés dans les figures 2 à 6 [figures 2 à 6].

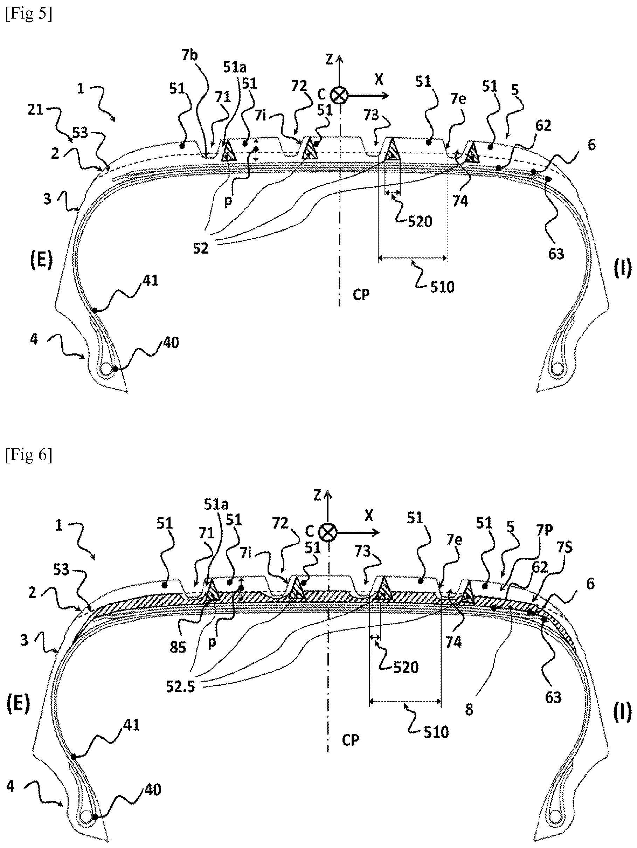

Quant à la hauteur radiale de l'élément de renforcement circonférentiel 52, à la figure 1 [Fig.1] et 2 [Fig.2], on voit qu'elle ne peut avantageusement pas être inférieure à 50% de l'épaisseur « p » de la bande de roulement, ladite largeur axiale ayant une valeur nulle à la position radiale la plus élevée, formant une sorte de pointe enfouie dans l'épaisseur du renforcement circonférentiel 52. Cela permet déjà d'obtenir un effet de renforcement significatif, tout en laissant en contact avec la chaussée seulement le mélange caoutchouteux de rigidité la plus basse jusqu'à mi-usure du pneumatique. Avantageusement, l'élément de renforcement circonférentiel 52 s'étend radialement sur une hauteur « h » correspondant de 50% à 100%, de préférence de 50 à 75% de l'épaisseur « p » de la bande de roulement 5. Cependant, comme sur les figures 3,4 et 5 [Fig.3], [Fig.4] et [Fig.5], la hauteur radiale de l'élément de renforcement circonférentiel 52 peut correspondre à 100% de l'épaisseur « p » de la bande de roulement, ladite largeur axiale ayant une valeur nulle à la position radiale correspondant à la surface de contact avec le sol à l'état neuf du pneumatique ; bien entendu, l'homme du métier pourra aisément ajuster les performances du pneumatique en adoptant pour la hauteur radiale toutes les valeurs intermédiaires entre les valeurs indiquées ci-dessus.

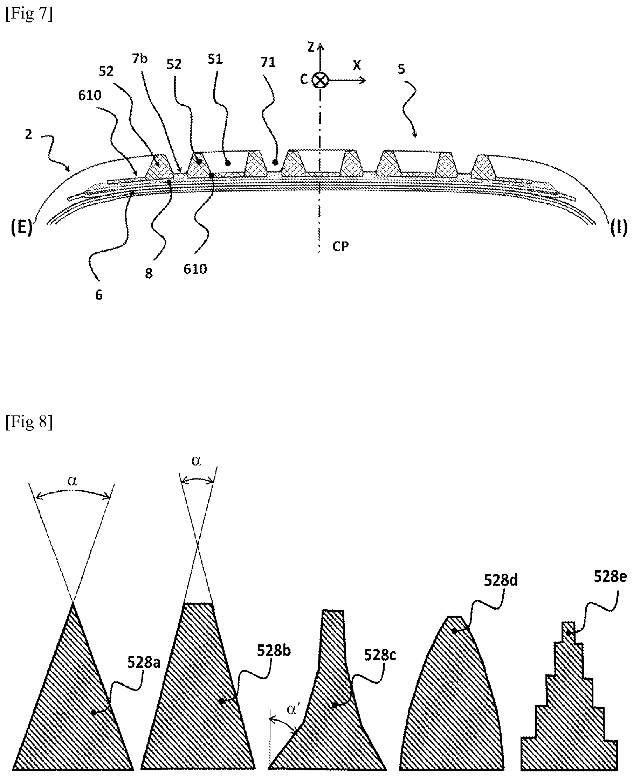

Les figures 4, 6 et 7 [Fig.4], [Fig.6] et [Fig.7] illustrent des exemples de mise en œuvre de l'invention dans lesquels la bande de roulement 2 comporte une couche radialement intérieure 8. Cette une couche radialement intérieure 8 de la bande de roulement peut être interposée entre l'armature de sommet 6 et lesdits blocs 51. Elle peut ne pas être interposée entre l'armature de sommet 6 et les éléments de renforcement circonférentiel 52 comme illustré par la figure 4 [Fig.4], ou bien elle peut être interposée entre l'armature de sommet 6 et lesdits blocs 51 et aussi entre l'armature de sommet 6 et chaque élément de renforcement circonférentiel 52 desdits blocs 51 comme illustré aux figures 6 et 7 [Fig.6] et [Fig.7]. Ainsi, la surface radialement intérieure de l'élément de renforcement circonférentiel 52 peut être disposée au contact de la surface radialement extérieure de l'armature de sommet 6. Toutefois, de manière particulièrement avantageuse, l'élément de renforcement circonférentiel 52 est situé au sein de la bande de roulement 5, c'est-à-dire pas en contact avec la surface radialement extérieure de l'armature de sommet 6, par exemple au contact de la surface radialement extérieure ou au sein d'une couche radialement intérieure (8) de la bande de roulement.

La forme des éléments de renforcement circonférentiel présentés dans les figures 1 à 7 [figures 1 à 7] est triangulaire, mais cette forme peut varier et les parois latérales peuvent être concaves, convexes ou en escaliers notamment sans sortir du cadre de cet invention. La figure 8 [Fig.8] dans laquelle, pour référence, un élément de renforcement circonférentiel 528a vu en coupe méridienne présente une forme en triangle telle qu'employé dans toutes les illustrations précédentes, les parois latérales vues en coupe méridienne étant donc des droites. Dans une variante formée par l'élément de renforcement circonférentiel 528b, la coupe méridienne de celui-ci est un trapèze, les parois latérales vues en coupe méridienne étant aussi des droites ; la limite radialement extérieure de cet élément de renforcement circonférentiel 528b est aussi une droite et, par exemple, celle-ci peut affleurer à la surface de la bande de roulement. Dans une variante formée par l'élément de renforcement circonférentiel 528c, les parois latérales vues en coupe méridienne sont des segments de droite, l'angle angle α' que forme chacun de ces segments avec la direction radiale variant d'un segment au suivant (diminuant en allant radialement vers l'extérieur sur la figure). Dans une variante formée par l'élément de renforcement circonférentiel 528d, les parois latérales vues en coupe méridienne sont courbes, convexes ; elles pourraient être concaves. Dans une variante formée par l'élément de renforcement circonférentiel 528e, les parois latérales vues en coupe méridienne forment des escaliers. Ces variations de forme de la coupe méridienne peuvent être utilisées avec toutes les modes de réalisation précédemment décrits. Les formes des éléments de renforcement circonférentiel 52 sont, de manière non limitative, de préférence axialement symétriques pour limiter les poussées parasites lors de la mise à plat mais les formes du renforcement peuvent également être asymétriques de manière à lutter contre les dits efforts parasites. Par ailleurs, avantageusement, l'angle α que forment les deux parois latérales du ou des éléments de renforcement circonférentiels est compris entre 10 et 50 degrés, de préférence entre 35 et 45 degrés. Lorsque les parois latérales du ou des éléments de renforcement circonférentiels ne sont pas des droites, l'angle α est considéré par rapport à la droite imaginaire partant des extrémités axiales de la base de l'élément de renforcement circonférentiel à l'extrémité (ou, les cas échéants, aux extrémités axiales adjacentes) du sommet de l'élément de renforcement circonférentiel.

Selon un mode de réalisation particulièrement préféré de l'invention, présenté à la figure 7 [Fig.7], on voit également une base prolongée 610 s'étendant axialement depuis un élément de renforcement circonférentiel 52. Sur cette figure, la base prolongée 610 est disposée radialement sur une couche radialement intérieure 8 et radialement à l'intérieur de la bande de roulement 5. Toutefois, la base prolongée 610 peut également être située sur la surface radialement extérieure de l'armature de sommet 6. De part et d'autre, axialement, de chacune des rainures 71, 72, 73, 74, on trouve un élément de renforcement circonférentiel 52 en forme de coin (vu en coupe méridienne). Cet élément de renforcement circonférentiel 52 s'étend radialement de la surface radialement extérieure de la couche radialement intérieure 8 de la bande de roulement vers l'extérieur de la bande de roulement 5 jusqu'à une hauteur radiale supérieure à 75% de l'épaisseur radiale de la bande de roulement.

Notons que la base prolongée 610 s'étend préférentiellement axialement d'un élément de renforcement circonférentiel 52 à l'autre pour ceux des blocs de sculpture compris entre deux rainures 71, 72, 73, 74, et s'étend axialement d'un élément de renforcement circonférentiel 52 vers l'épaule 2. De préférence également, la base prolongée 610 recouvre sensiblement en totalité une couche radialement intérieure 8 de la bande de roulement, pour les blocs de sculpture situés aux extrémités axiales de la bande de roulement. Avantageusement, le pneumatique comprenant au moins deux éléments de renforcement circonférentiels 52, et une base prolongée 610 disposée radialement sur une couche radialement intérieure 8 de la bande de roulement interposée entre l'armature de sommet 6 et lesdits blocs 51, et axialement recouvrant la couche radialement intérieure 8 de la bande de roulement entre deux éléments de renforcement circonférentiels 52. De préférence, la base prolongée 610 lie deux éléments de renforcement circonférentiels 52 en dehors des rainures 71, 72, 73, 74. Toutefois, elle pourrait également lier deux éléments de renforcement circonférentiels 52 en passant sous les rainures 71, 72, 73, 74. Par ailleurs, la base prolongée 610 peut également être disposée radialement sur une couche radialement intérieure 8 de la bande de roulement interposée entre l'armature de sommet 6 et lesdits blocs 51, et axialement recouvrant la couche radialement intérieure 8 de la bande de roulement entre un élément renforçant 52 et l'épaule 2.

Avantageusement, chaque élément de renforcement circonférentiel 52 est constitué de la même composition. En outre, lorsque la bande de roulement comprend une base prolongée 610, la base prolongée 610 est avantageusement constituée de la même composition que les éléments de renforcement circonférentiels 52, ce qui permet de les extruder en une seule et même opération avec la base prolongée 610.

Selon l'invention, la composition de l'élément de renforcement circonférentiel 52 est à base (i) d'au moins un élastomère diénique, (ii) d'au moins une charge renforçante comprenant un noir de carbone présentant une surface spécifique STSA mesurée selon la norme ASTM D6556-2016 supérieure ou égale à 90 m²/g, (iii) d'au moins une résine époxyde, d'au moins un durcisseur aminé et (iv) d'au moins un système de réticulation.

La composition de l'élément de renforcement circonférentiel 52 comprend au moins un élastomère diénique. Elle peut donc contenir un seul élastomère diénique ou un mélange de plusieurs élastomères diéniques.

Par élastomère (ou indistinctement caoutchouc) « diénique », qu'il soit naturel ou synthétique, doit être compris de manière connue un élastomère constitué au moins en partie (i.e., un homopolymère ou un copolymère) d'unités monomères diènes (monomères porteurs de deux doubles liaisons carbone-carbone, conjuguées ou non).

Ces élastomères diéniques peuvent être classés dans deux catégories : « essentiellement insaturés » ou « essentiellement saturés ». On entend en général par « essentiellement insaturé », un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Les élastomères diéniques compris dans la composition selon l'invention sont préférentiellement essentiellement insaturés.

On entend particulièrement par élastomère diénique susceptible d'être utilisé dans les compositions conformes à l'invention :
a) tout homopolymère d'un monomère diène, conjugué ou non, ayant de 4 à 18 atomes de carbone ;
b) tout copolymère d'un diène, conjugué ou non, ayant de 4 à 18 atomes de carbone et d'au moins un autre monomère.

L'autre monomère peut être l'éthylène, une oléfine ou un diène, conjugué ou non.

À titre de diènes conjugués conviennent les diènes conjugués ayant de 4 à 12 atomes de carbone, en particulier les 1,3-diènes, tels que notamment le 1,3-butadiène et l'isoprène. À titre d'oléfines conviennent les composés vinylaromatiques ayant de 8 à 20 atomes de carbone et les α-monooléfines aliphatiques ayant de 3 à 12 atomes de carbone.

À titre de composés vinylaromatiques conviennent par exemple le styrène, l'ortho-, méta-, para-méthylstyrène, le mélange commercial « vinyle-toluène », le para-tertiobutylstyrène. À titre d'α-monooléfines aliphatiques conviennent notamment les α-monooléfines aliphatiques acycliques ayant de 3 à 18 atomes de carbone.

Préférentiellement, l'élastomère diénique est choisi dans le groupe constitué par les polybutadiènes (BR), le caoutchouc naturel (NR), les polyisoprènes de synthèse (IR), les copolymères de butadiène, les copolymères d'isoprène et les mélanges de ces élastomères. Les copolymères de butadiène sont particulièrement choisis dans le groupe constitué par les copolymères de butadiène-styrène (SBR).

De manière préférée, l'élastomère diénique est un élastomère isoprénique.

Par « élastomère isoprénique », on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence choisi dans le groupe constitué par le caoutchouc naturel, les polyisoprènes cis-1,4 de synthèse et leurs mélanges. Parmi ces polyisoprènes de synthèse, sont utilisés de préférence des polyisoprènes ayant un taux (% molaire) de liaisons cis-1,4 supérieur à 90%, plus préférentiellement encore supérieur à 98%. De manière préférée et selon l'un quelconque des arrangements de la présente, l'élastomère diénique est le caoutchouc naturel.

Préférentiellement le taux d'élastomère diénique, de préférence le taux d'élastomère isoprénique, de préférence la taux le caoutchouc naturel, est compris dans un domaine allant de 50 à 100 pce, plus préférentiellement de 60 à 100 pce, de manière plus préférentielle de 70 à 100 pce, plus préférentiellement encore de 80 à 100 pce et de manière très préférentielle de 90 à 100 pce. En particulier le taux d'élastomère diénique, de préférence d'élastomère isoprénique, de préférence encore de caoutchouc naturel, est très préférentiellement de 100 pce.

Qu'elle contienne un seul élastomère diénique ou un mélange de plusieurs élastomères diéniques, la composition de caoutchouc selon l'invention peut également contenir de manière minoritaire tout type d'élastomère synthétique autre que diénique, voire des polymères autres que des élastomères, par exemple des polymères thermoplastiques. De préférence, la composition de caoutchouc selon l'invention ne contient pas d'élastomère synthétique autre que diénique ni de polymère autre que des élastomères ou en contient moins de 10 pce, de préférence moins de 5 pce.

La composition de l'élément de renforcement circonférentiel 52 conforme à l'invention comprend également une charge renforçante comprenant un noir de carbone présentant une surface spécifique STSA mesurée selon la norme ASTM D6556-2016 supérieure ou égale à 90 m²/g.

Préférentiellement, la surface spécifique STSA du noir de carbone utilisable dans la composition de l'élément de renforcement circonférentiel 52 est comprise dans un domaine allant de 95 à 250 m²/g, plus préférentiellement encore dans un domaine allant de 100 à 190 m²/g, plus préférentiellement dans un domaine allant de 110 à 150 m²/g. Préférentiellement, le noir de carbone utilisable dans la composition de l'élément de renforcement circonférentiel 52 peut avoir comme caractéristique additionnelle un indice COAN supérieur ou égal à 75 ml/100 g, l'indice COAN étant mesuré selon la norme ASTM D3493-2018. Plus préférentiellement encore, l'indice COAN est compris dans un domaine allant de 80 à 140 ml/100g, plus préférentiellement encore allant de 90 à 130 ml/100g. Préférentiellement, le noir de carbone utilisable dans la composition de l'élément de renforcement circonférentiel 52 présente une surface spécifique STSA supérieure ou égale à 90 m²/g et un indice COAN supérieur ou égal à 75 ml/100g. Plus préférentiellement encore, le noir de carbone présente une surface spécifique STSA comprise dans un domaine allant de 95 à 250 m²/g et un indice COAN allant de 90 à 130 ml/100g. Préférentiellement, le noir de carbone utilisable dans la composition de l'élément de renforcement circonférentiel 52 présente un indice d'adsorption d'iode mesuré selon la norme ASTM D1510-2017 supérieure ou égale à 100 g/kg.

Plus préférentiellement encore, le noir de carbone utilisable dans la composition de l'élément de renforcement circonférentiel 52 présente un indice d'adsorption d'iode compris dans un domaine allant de 105 à 200 g/kg, plus préférentiellement allant de 115 à 170 g/kg.

Plus préférentiellement encore, le noir de carbone présente une surface spécifique STSA comprise dans un domaine allant de 95 à 250 m²/g et un indice COAN allant de 90 à 130 ml/100g et un indice d'adsorption d'iode compris dans un domaine allant de 115 à 170 g/kg.

Les noirs de carbone utilisables dans la composition de l'élément de renforcement circonférentiel 52 peuvent être obtenus par n'importe quel procédé de fabrication de noir de carbone et sont disponible commercialement auprès de fournisseurs tels que Cabot, Orion etc...

On notera que les noirs de carbone pourraient être par exemple déjà incorporés à l'élastomère diénique, tel que par exemple un élastomère isoprénique, de préférence au caoutchouc naturel, sous la forme d'un mélange maître aussi appelé « masterbatch en anglais », réalisé par voie sèche ou liquide tel que décrit dans les documents WO97/36724A2 ou WO99/16600A1.

Le noir de carbone décrit ci-dessus constitue avantageusement plus de 50 % en masse de masse de la charge renforçante ; autrement dit le noir de carbone décrit ci-dessus est majoritaire dans la charge renforçante. Préférentiellement le noir de carbone décrit ci-dessus constitue plus de 70 % en masse, de façon plus préférentielle encore plus de 90 % en masse de la charge renforçante, et de façon encore plus préférentielle représente 100 % en masse de la charge renforçante.

Selon une variante de l'invention, la charge renforçante peut comprendre en plus du noir de carbone précité ci-dessus une charge renforçante inorganique, plus préférentiellement une silice.

Par « charge inorganique renforçante », doit être entendu dans la présente demande, par définition, toute charge inorganique ou minérale (quelle que soit sa couleur et son origine naturelle ou de synthèse), encore appelée charge « blanche », charge « claire » voire « charge non noire » (« non-black filler ») par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titre de silices précipitées hautement dispersibles (dites "HDS"), on citera par exemple les silices « Ultrasil 7000 » et « Ultrasil 7005 » de la société Degussa, les silices « Zeosil » 1165MP, 1135MP et 1115MP de la société Rhodia, la silice « Hi-Sil EZ150G » de la société PPG, les silices « Zeopol » 8715, 8745 et 8755 de la Société Huber, les silices à haute surface spécifique telles que décrites dans la demande WO 03/16837.

La surface spécifique BET de la silice est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative p/po : 0.05 à 0.17). La surface spécifique CTAB de la silice est déterminée selon la norme française NF T 45-007 de novembre 1987 (méthode B).

Conviennent également comme charges inorganiques renforçantes les charges minérales du type alumineuse, en particulier de l'alumine (Al₂O₃) ou des (oxyde)hydroxydes d'aluminium, ou encore des oxydes de titane renforçants, par exemple décrits dans US 6,610,261 et US 6,747,087.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, permettant d'établir la liaison entre la charge et l'élastomère en présence ou non d'un agent de recouvrement ou de couplage.

Pour coupler la charge inorganique renforçante à l'élastomère diénique, on peut utiliser de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels. Par « bifonctionnel », on entend un composé possédant un premier groupe fonctionnel capable d'interagir avec la charge inorganique et un second groupe fonctionnel capable d'interagir avec l'élastomère diénique. Par exemple, un tel composé bifonctionnel peut comprendre un premier groupe fonctionnel comprenant un atome de silicium, le dit premier groupe fonctionnel étant apte à interagir avec les groupes hydroxyles d'une charge inorganique et un second groupe fonctionnel comprenant un atome de soufre, le dit second groupe fonctionnel étant apte à interagir avec l'élastomère diénique.

Préférentiellement, les organosilanes sont choisis dans le groupe constitué par les organosilanes polysulfurés (symétriques ou asymétriques) tels que le tétrasulfure de bis(3-triéthoxysilylpropyl), en abrégé TESPT commercialisé sous la dénomination « Si69 » par la société Evonik ou le disulfure de bis-(triéthoxysilylpropyle), en abrégé TESPD commercialisé sous la dénomination « Si75 » par la société Evonik, les polyorganosiloxanes, les mercaptosilanes, les mercaptosilanes bloqués, tels que l'octanethioate de S-(3-(triéthoxysilyl)propyle) commercialisé par la société Momentive sous la dénomination « NXT Silane ». Plus préférentiellement, l'organosilane est un organosilane polysulfuré.

La teneur en agent de couplage est préférentiellement inférieure à 12 pce, étant entendu qu'il est en général souhaitable d'en utiliser le moins possible. Typiquement lorsque qu'une charge inorganique renforçante est présente, le taux d'agent de couplage représente de 0,5% à 15% en poids par rapport à la quantité de charge inorganique. Son taux est préférentiellement compris dans un domaine allant de 0,5 à 15 pce. Ce taux est aisément ajusté par l'homme du métier selon le taux de charge inorganique utilisé dans la composition.

Avantageusement, le taux de charge renforçante dans la composition dudit élément de renforcement circonférentiel 52 est compris dans un domaine allant de 20 à 200 pce, de préférence de 25 à 150 pce, plus préférentiellement de 30 à 100 pce.

Les résines époxydes utilisables dans la composition dudit élément de renforcement circonférentiel 52 incluent tous les composés polyépoxydes. Préférentiellement, la résine époxyde est choisie dans le groupe constitué par les résines époxydes aromatiques, les époxydes alicycliques, les époxydes aliphatiques et leurs mélanges. Par exemple, la résine époxyde aromatique peut être une résine époxyde amine-aromatique. Les résines époxydes sont préférentiellement des résines époxydes novolaques, c'est-à-dire des résines époxydes obtenues par catalyse acide, par opposition aux résines résols, obtenues par catalyse basique.

En particulier, parmi les résines époxydes aromatiques, sont préférées les résines époxydes choisies dans le groupe constitué par le 2,2 bis[4-(glycidyloxy) phényl] propane, le poly[(o-crésylglycidyl éther)-co-formaldéhyde], le poly[(phénylglycidyl éther)-co-formaldéhyde], le poly[(phenylglycidyl éther)-co(hydroxybenzaldehyde glycidyl éther)], les résines époxydes amines aromatiques et le mélanges de ces composés, et de manière préférée les résines époxydes choisies dans le groupe constitué par le poly[(o-crésylglycidyl éther)-co-formaldéhyde, et le poly[(phenylglycidyl éther)-co(hydroxybenzaldehyde glycidyl éther)] et leur mélange.

De préférence encore, la résine époxyde est choisie dans le groupe constitué par le poly[o-crésylglycidyl éther)-co-formaldéhyde], le poly[phénylglycidyl éther)-co-formaldéhyde], les résines époxydes amines aromatiques et le mélanges de ces composés.

À titre d'exemple de résines époxydes disponibles dans le commerce et utilisables dans le cadre de la présente invention, on peut citer par exemple la résine époxyde « DEN 439 » de la société Uniqema, la résine époxyde « Tris(4-hydroxyphenyl)methane triglycidyl ether » de la société Sigma-Aldrich, la résine époxy crésol novolaque araldite « ECN 1299 » de la société Hunstman, la résine époxy phénol novolaque araldite « EPN 1138 » de la société Huntsman.

Le taux de résine époxyde dans la composition dudit élément de renforcement circonférentiel 52 est comprise dans un domaine allant de 1 à 30 pce. Compte tenu du durcisseur aminé utilisé dans le cadre de la présente invention, en dessous du taux minimum de résine indiqué, l'effet technique visé est insuffisant, alors qu'au-delà du maximum indiqué, on s'expose à des risques d'augmentation trop importante de la rigidité et de pénalisation excessive de l'hystérèse et des propriétés limite du matériau. Pour toutes ces raisons, le taux de résine époxyde est préférentiellement est compris dans un domaine allant de 5 à 25 pce. De préférence encore, le taux de résine époxyde dans la composition dudit élément de renforcement circonférentiel 52 est compris dans un domaine allant de 8 à 20 pce.

L'association du noir de carbone spécifique tel que décrit ci-dessus, y compris ses formes préférées, avec la résine époxyde spécifique tels que décrite ci-dessus, y compris ses formes préférées permet de manière totalement inattendue d'améliorer la rigidité aux faibles de la composition élastomérique les contenant tout en conservant des propriétés d'hystérèse basse (donc favorable à la résistance au roulement). Avantageusement, de manière surprenante la composition élastomérique grâce à cette combinaison présente également une meilleure cohésion, est donc plus résistante à la fissuration.

La composition de l'élément de renforcement circonférentiel 52 conforme à l'invention comprend également un durcisseur aminé. Ce durcisseur aminé associé à la résine permet la réticulation de la résine.

On peut utiliser tout durcisseur aminé connu pour la composition de l'élément de renforcement circonférentiel 52.

Des durcisseurs connus sont les composés (poly)aminés dont, les composés polyphénol et les photoinitiateurs cationiques, notamment les dicyandiamides, les hydrazides, les composés imidazole, les sels de sulfonium, les sels d'onium, les ketimines, les anhydrides d'acides, par exemple le polyanhydride le 4,4'-(4,4'-isopropylidènediphénoxy)bis(phtalic anhydride), et le pyromellitic dianhydride

En particulier, les polyamines sont préférées. Préférentiellement, le durcisseur aminé est choisi dans le groupe constitué par les polyamines aliphatiques, les polyamines alicycliques, les polyamines aromatiques et leurs mélanges. Les composés polyamines incluent les polyamines aliphatiques tels que l'éthylènediamine, le diéthylènetriamine, et le triéthylènetétramine, en particulier le 1,8-diaminooctane, les polyamines alicycliques tels que le 1,3 bis(aminométhyl)cyclohexane, les aminés aliphatiques ayant un cycle aromatique tels que le m-xylylènediamine, le p-xylylènediamine, et les polyamines aromatiques, le m-phénylènediamine, 2,2-bis(4-aminophényl)propane, diaminodiphénylméthane, diaminodiphénylsulfone, 2,2-bis(4-aminophényl)-p-diisopropylbenzène, en particulier le 3,3 '-diaminobenzidine.

Plus préférentiellement, encore le durcisseur est une polyamine aromatique, de préférence une polyamine aromatique comprenant au moins deux fonctions amines primaires situées sur au moins (c'est-à-dire un ou plusieurs) cycle aromatique à 6 atomes de carbone.

Les durcisseurs polyamine aromatique comprenant au moins deux fonctions amines primaires situées sur au moins un cycle aromatique à 6 atomes de carbone sont bien connus et décrits dans la demande WO2018002538 page 13 à 19.

Préférentiellement, le durcisseur aminé est choisi dans le groupe constitué par le m-xylylènediamine, le p-xylylènediamine, 1,3 bis(aminométhyl)cyclohexane, 1,8-diaminooctane, le 3,3 '-diaminobenzidine, le 4,4'-méthylènebis[2,6-diéthylaniline], le méthylènebis(3-chloro-2,6-diéthylaniline), le 1-méthyl-3,5-diéthyl-2,6-diaminobenzène, le 3,5-diéthyltoluène-2,4-diamine, le 2-méthyl-4,6-bis(méthylthio)-1,3-benzenediamine, le 4-méthyl-2,6-bis(méthylthio)-1,3-benzenediamine et le mélange de ces composés

Plus préférentiellement encore, le durcisseur aminé est choisi dans le groupe constitué par le 4,4'-méthylènebis[2,6-diéthylaniline], le méthylènebis(3-chloro-2,6-diéthylaniline), le 1-méthyl-3,5-diéthyl-2,6-diaminobenzène, le 3,5-diéthyltoluène-2,4-diamine, le 2-méthyl-4,6-bis(méthylthio)-1,3-benzenediamine, le 4-méthyl-2,6-bis(méthylthio)-1,3-benzenediamine et le mélange de ces composés.

La quantité de durcisseur aminé est comprise dans un domaine allant de 1 à 15 pce, plus préférentiellement dans un domaine allant de 1 à 10 pce, plus préférentiellement encore de 2 à 8 pce ; en dessous du minimum indiqué, l'effet technique visé s'est révélé insuffisant, alors qu'au-delà du maximum indiqué, on s'expose à des risques de pénalisation de la mise en œuvre à l'état cru des compositions.

Plus préférentiellement encore, la résine époxyde est choisie dans le groupe constitué par dans le groupe constitué par le poly[o-crésylglycidyl éther)-co-formaldéhyde], le poly[phénylglycidyl éther)-co-formaldéhyde] et leurs mélanges et le durcisseur aminé est choisi dans le groupe constitué par le 4,4'-méthylènebis[2,6-diéthylaniline], le méthylènebis(3-chloro-2,6-diéthylaniline), le 1-méthyl-3,5-diéthyl-2,6-diaminobenzène, le 3,5-diéthyltoluène-2,4-diamine, le 2-méthyl-4,6-bis(méthylthio)-1,3-benzenediamine, le 4-méthyl-2,6-bis(méthylthio)-1,3-benzenediamine et le mélange de ces composés.

Le système de réticulation dudit élément de renforcement circonférentiel 52 peut être tout type de système connu de l'homme de l'art dans le domaine des compositions de caoutchouc pour pneumatique. Il peut notamment être à base de soufre, et/ou de peroxyde et/ou de bismaléimides.

De manière préférentielle, le système de réticulation est à base de soufre, on parle alors d'un système de vulcanisation. Le soufre peut être apporté sous toute forme, notamment sous forme de soufre moléculaire et/ou d'agent donneur de soufre. Au moins un accélérateur de vulcanisation est également préférentiellement présent, et, de manière optionnelle, préférentielle également, on peut utiliser divers activateurs de vulcanisation connus tels que l'oxyde de zinc, l'acide stéarique ou un composé équivalent tels que les sels d'acide stéarique et les sels de métaux de transition, les dérivés guanidiques (en particulier la diphénylguanidine), ou encore des retardateurs de vulcanisation connus.

Le soufre est utilisé, dans la composition dudit élément de renforcement circonférentiel 52, à un taux préférentiel compris entre 0,3 pce et 10 pce, plus préférentiellement entre 0,3 et 5 pce. L'accélérateur primaire de vulcanisation est utilisé, dans la composition dudit élément de renforcement circonférentiel 52, à un taux préférentiel compris entre 0,5 et 10 pce, plus préférentiellement compris entre 0,5 et 5 pce.

On peut utiliser comme accélérateur tout composé susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. A titre d'exemples de tels accélérateurs, on peut citer notamment les composés suivants : disulfure de 2-mercaptobenzothiazyle (en abrégé MBTS), N-cyclohexyl-2-benzothiazyle sulfénamide (CBS), N,N-dicyclohexyl-2-benzothiazyle sulfénamide (DCBS), N-ter-butyl-2-benzothiazyle sulfénamide (TBBS), N-ter-butyl-2-benzothiazyle sulfénimide (TBSI), disulfure de tetrabenzylthiurame (TBZTD), dibenzyldithiocarbamate de zinc (ZBEC) et les mélanges de ces composés.

Bien que cela ne soit pas nécessaire pour la mise en œuvre de l'invention, la composition dudit élément de renforcement circonférentiel 52 peut comprendre un plastifiant.

De manière connue de l'homme de l'art des compositions de caoutchouc pour pneumatique, ce plastifiant est de préférence choisi parmi les résines hydrocarbonées de haute température de transition vitreuse (Tg), c'est-à-dire ayant une Tg supérieure à 20°C, de préférence supérieure à 30°C, les résines hydrocarbonées de faible Tg, c'est-à-dire ayant une Tg comprise dans un domaine allant de -40°C à 20°C, les huiles plastifiantes, et leurs mélanges. De préférence, le plastifiant est choisi parmi les résines hydrocarbonées de haute Tg, les huiles plastifiantes, et leurs mélanges.

De préférence, la composition dudit élément de renforcement circonférentiel 52 ne comprend pas de résine plastifiante hydrocarbonée (de haute ou de faible Tg) ou en comprend moins de 19 pce, de préférence moins de 15 pce, de préférence encore moins de 10 pce. De préférence encore, la composition dudit élément de renforcement circonférentiel 52 ne comprend pas du tout de résine plastifiante hydrocarbonée.

Avantageusement également, la composition dudit élément de renforcement circonférentiel 52 ne comprend pas d'huile plastifiante liquide à 20°C ou en comprend moins de 33 pce, de préférence moins de 15 pce.

Toutefois, l'utilisation d'huile plastifiante peut s'avérer utile pour faciliter la préparation et la mise en œuvre de l'élément de renforcement circonférentiel 52. Ainsi, préférentiellement, lequel la composition dudit élément de renforcement circonférentiel (52) comprend de 0 à 25 pce, de préférence de 5 à moins de 15 pce d'au moins une huile plastifiante liquide à 20°C.

Toute huile plastifiante liquide à 20°C, qu'elle soit de nature aromatique ou non-aromatique connue pour ses propriétés plastifiantes vis-à-vis d'élastomères, est utilisable. A température ambiante (20°C), ces huiles, plus ou moins visqueuses, sont des liquides (c'est-à-dire, pour rappel, des substances ayant la capacité de prendre à terme la forme de leur contenant), par différence notamment avec les résines hydrocarbonées de haute Tg qui sont par nature solides à température ambiante. L'huile plastifiante liquide présente une avantageusement une Tg inférieure à -20 °C, de préférence inférieure à -40 °C.

Conviennent particulièrement les huiles plastifiantes choisies dans le groupe constitué par les huiles naphténiques (à basse ou haute viscosité, notamment hydrogénées ou non), les huiles paraffiniques, les huiles MES (Medium Extracted Solvates), les huiles TDAE (Treated Distillate Aromatic Extracts), les huiles RAE (Residual Aromatic Extract oils), les huiles TRAE (Treated Residual Aromatic Extract) et les huiles SRAE (Safety Residual Aromatic Extract oils), les huiles minérales, les huiles végétales, les plastifiants éthers, les plastifiants esters, les plastifiants phosphates, les plastifiants sulfonates et les mélanges de ces composés. De préférence, l'huile plastifiante liquide à 20°C est choisie dans le groupe constitué par les huiles paraffiniques, les huiles MES (Medium Extracted Solvates), les huiles TDAE (Treated Distillate Aromatic Extracts), les huiles végétales et leurs mélanges, de préférence parmi les huiles paraffiniques.

La composition de l'élément de renforcement circonférentiel 52 peut comporter optionnellement également tout ou partie des additifs usuels habituellement utilisés dans les compositions d'élastomères pour pneumatique, comme par exemple des pigments, des agents de protection tels que cires anti-ozone, anti-ozonants chimiques, anti-oxydants, des agents anti-fatigues.

Les compositions de caoutchouc utilisables dans le cadre de la présente invention peuvent être fabriquées dans des mélangeurs appropriés, en utilisant deux phases de préparation successives bien connues de l'homme du métier :
- une première phase de travail ou malaxage thermomécanique (phase dite « non-productive »), qui peut être conduite en une seule étape thermomécanique au cours de laquelle on introduit, dans un mélangeur approprié tel qu'un mélangeur interne usuel (par exemple de type « Banbury »), tous les constituants nécessaires, notamment la matrice élastomérique, la charge renforçante, les éventuels autres additifs divers, à l'exception du système de réticulation. L'incorporation de la charge éventuelle à l'élastomère peut être réalisée en une ou plusieurs fois en malaxant thermomécaniquement. Dans le cas où la charge est déjà incorporée en totalité ou en partie à l'élastomère sous la forme d'un mélange-maître (« masterbatch » en anglais) comme cela est décrit par exemple dans les demandes WO 97/36724 ou WO 99/16600, c'est le mélange-maître qui est directement malaxé et le cas échéant on incorpore les autres élastomères ou charges présents dans la composition qui ne sont pas sous la forme de mélange-maître, ainsi que les éventuels autres additifs divers autres que le système de réticulation. La phase non-productive peut être réalisée à haute température, jusqu'à une température maximale comprise entre 110°C et 200°C, de préférence entre 130°C et 185°C, pendant une durée généralement comprise entre 2 et 10 minutes.
- une seconde phase de travail mécanique (phase dite « productive »), qui est réalisée dans un mélangeur externe tel qu'un mélangeur à cylindres, après refroidissement du mélange obtenu au cours de la première phase non-productive jusqu'à une plus basse température, typiquement inférieure à 120°C, par exemple entre 40°C et 100°C.On incorpore alors le système de réticulation, et le tout est alors mélangé pendant quelques minutes, par exemple entre 5 et 15 min.

De telles phases ont été décrites par exemple dans les demandes EP-A-0501227, EP-A-0735088, EP-A-0810258, WO00/05300 ou WO00/05301.

La composition finale ainsi obtenue est ensuite extrudée ou co-extrudée avec une autre composition de caoutchouc) sous la forme d'un semi-fini (ou profilé) de caoutchouc utilisable par exemple comme éléments de renforcement circonférentiels ou lorsqu'elle est co-extrudée utilisées comme bande de roulement par exemples. Ces produits peuvent ensuite être utilisés pour la fabrication de pneumatiques, selon les techniques connues de l'homme du métier.

La composition peut être soit à l'état cru (avant réticulation ou vulcanisation), soit à l'état cuit (après réticulation ou vulcanisation), peut être un produit semi-fini qui peut être utilisé dans un pneumatique. La réticulation de la composition peut être conduite de manière connue de l'homme du métier, par exemple à une température comprise entre 130°C et 200°C, sous pression au sein du pneumatique.

L'invention concerne plus particulièrement les pneumatiques destinés à équiper des véhicules à moteur à quatre roues ou plus (véhicule de tourisme notamment de type sportif, SUV (abréviation de « Sports Utility Vehicles »), ou aussi pour équiper des véhicules de type deux roues (notamment motos), ou encore des avions, des véhicules industriels choisis parmi camionnettes, «poids-lourd» (c'est-à-dire métro, bus, engins de transport routier - camions, tracteurs, remorques-, véhicules hors-la-route tels qu'engins agricoles ou de génie civil), autres véhicules de transport ou de manutention. L'invention trouve à s'appliquer aussi bien aux ensembles gonflés dits « pneumatiques » qu'aux ensembles roulants non pneumatiques.

### IV- EXEMPLES

### IV-1 Mesures et tests utilisés

### Propriétés dynamiques

Les propriétés dynamiques G* et tan(δ) sont mesurées sur un viscoanalyseur (Metravib VA4000), selon la norme ASTM D5992-96. On enregistre la réponse d'un échantillon de composition vulcanisée (éprouvette cylindrique de 2 mm d'épaisseur et de 79 mm² de section, soumis à une sollicitation sinusoïdale en cisaillement simple alterné, à la fréquence de 10Hz, dans les conditions normales de température (23°C) selon la norme ASTM D 1349-09. On effectue un balayage en amplitude de déformation de 0,01% à 10% (cycle aller), puis de 10% à 0,01% (cycle retour).

Les résultats exploités sont le module complexe de cisaillement dynamique G* et le facteur de perte tan(δ). Sur le cycle aller, on enregistre la valeur du G* à 5% de déformation ainsi que le facteur de perte, noté tan(δ).

Les résultats de G* à 5% de déformation sur le cycle aller et de tan(δ) à 23°C sont exprimés en performance base 100, la valeur 100 étant attribuée au témoin. Un résultat supérieur à 100 indique que la composition de l'exemple considéré est respectivement plus rigide et moins hystérétique, traduisant respectivement une meilleure rigidité pour l'application considérée et une résistance au roulement améliorée (moins élevée).

### Viscosité Mooney

On utilise un consistomètre oscillant tel que décrit dans la norme française ISO 289-1 (2015). La mesure de l'indice Mooney se fait selon le principe suivant : la composition de caoutchouc à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. L'indice Mooney (ML 1 +4) est exprimé en « unité Mooney » (UM, avec 1 0,83 N.m (Newton.mètre)).

Les résultats d'indice Mooney sont exprimés en termes de performance en base 100, c'est-à-dire que la valeur 100 est arbitrairement assignée au témoin, afin de comparer consécutivement l'indice Mooney des différentes compositions échantillons soumises à essai (c'est-à-dire leur processabilité). La valeur en base 100 de la composition échantillon soumise à essai est calculée selon l'opération : (valeur l'indice Mooney du témoin / valeur l'indice Mooney de l'échantillon) * 100. Un résultat supérieur à 100 indique une performance améliorée, c'est-à-dire que la composition de l'échantillon considéré présente une diminution de sa viscosité, corroborant une meilleure processabilité par rapport à la composition témoin.

### Déchirabilité

La force et la déformation de déchirabilité sont mesurées sur une éprouvette étirée à 500 mm/min pour provoquer la rupture de l'éprouvette. L'éprouvette de traction est constituée par une plaque de caoutchouc de forme parallélépipédique d'épaisseur de 2 mm, de longueur de 150 mm et de largeur de 13 mm, les deux bords latéraux étant chacun recouverts dans le sens de la longueur d'un bourrelet de caoutchouc cylindrique (diamètre 5 mm) permettant l'ancrage dans les mors de la machine de traction. Trois entailles très fines de longueur comprise entre 17 mm sont réalisées à l'aide d'une lame de rasoir, à mi-largeur et alignées dans le sens de la longueur de l'éprouvette, une à chaque extrémité et une au centre de l'éprouvette, avant le démarrage du test. On détermine la force (N/mm) à exercer pour obtenir la rupture et on mesure l'allongement à la rupture et la contrainte rupture. La contrainte rupture (CR) et l'allongement rupture sont des descripteurs de cohésion du matériau pour résister à la fissuration. Ces mesures sont effectuées dans les conditions normales de températures (23 ± 2°C) et d'hygrométrie (50 ± 5% d'humidité relative) selon la norme française NF T 40-101 (décembre 1979).

Les résultats de contrainte rupture (CR) et d'allongement rupture (AR) sont exprimés en performance base 100, la valeur 100 étant attribuée au témoin. Un résultat supérieur à 100 pour les deux descripteurs indique que la composition de l'exemple considéré présente une meilleure cohésion du matériau, donc sera plus résistante à la fissuration.

### IV-2 Essais de compositions de caoutchouc

Les exemples présentés ci-dessous ont pour objet de comparer le compromis de performance entre la rigidité, l'hystérèse, et la cohésion d'une composition conforme à la présente invention (C1) avec trois compositions témoin (T1, T2 et T3).

La composition témoin T2 diffère de la composition T1 uniquement par le grade du noir de carbone.

La composition C1 conforme à l'invention diffère de la composition témoin T3 uniquement par le grande du noir de carbone.

La composition C1 conforme à l'invention diffère de la composition témoin T2 uniquement par la nature chimique de la résine.

Les taux des différents constituants des compositions sont présentés dans le tableau 1 et sont exprimés en pce (partie en poids pour cent parties en poids d'élastomère).

**[Tableau 1]**

| | **T1** | **T2** | **T3** | **C1** |
|---|---|---|---|---|
| Elastomère diénique⁽¹⁾ | 100 | 100 | 100 | 100 |
| ZnO ⁽²⁾ | 3.00 | 3.00 | 3.00 | 3.00 |
| Antioxydant⁽³⁾ | 2.50 | 2.50 | 2.50 | 2.50 |
| Acide stéarique | 2.00 | 2.00 | 2.00 | 2.00 |
| CBS⁽⁴⁾ | 2.00 | 2.00 | 2.00 | 2.00 |
| Soufre | 3.00 | 3.00 | 3.00 | 3.00 |
| Résine durcissante ⁽⁵⁾ | 12.00 | 12.00 | (-) | (-) |
| HMT3H⁽⁶⁾ | 4.00 | 4.00 | (-) | (-) |
| Résine durcissante⁽⁷⁾ | (-) | (-) | 12.00 | 12.00 |
| Durcisseur⁽⁸⁾ | (-) | (-) | 4.00 | 4.00 |
| Noir de carbone⁽⁹⁾ | 70.00 | (-) | 70.00 | (-) |
| Noir de carbone⁽¹⁰⁾ | (-) | 70.00 | (-) | 70.00 |

| | | | | |
|---|---|---|---|---|
| 1. Elastomère diénique : caoutchouc naturel ; 2. Oxyde de zinc de grade industriel de la société Umicore ; 3. N-1,3-diméthylbutyl-N-phénylparaphénylènediamine « Santoflex 6-PPD » de la société Flexsys ; 4. N-cyclohexyl-2-benzothiazyle sulfénamide « Santocure CBS » de la société Flexsy ;s 5. Résine Hard FP : résine formophénolique type phénorez commercialisée sous le nom « Peracit 4536K » de la société Perstorp. 6. Hexaméthoxyméthyltétramine commercialisé par la société Degussa ; 7. Résine durcissante : résine époxyde novolaque : poly[(o-cresyl glycidyl ether)-do-formaldéhyde] commercialisé sous le nom de « araldite ECN1299 » par Huntsmann; 8. Durcisseur amine : Diméthylthiotoluènediamine commercialisé sous la référence « Ethacure 300 » par la société Albemarle Louvain 9. Noir de carbone de grade ASTM N326 (ASTM D1565-14) commercialisé par la société Cabot ; Surface STSA mesurée selon la norme ASTM D6556-2016 est de 76 m²/g, l'indice COAN mesuré selon la norme ASTM D3493-2018 est de 68 ml/100g, l'indice d'adsorption d'iode mesuré selon la norme ASTM D1510-2017 est de 82 g/kg. 10. Noir de carbone de grade ASTM N115 (ASTM D1565-14) commercialisé par la société Cabot ; Surface STSA mesurée selon la norme ASTM D6556-2016 est de 124 m²/g, l'indice COAN mesuré selon la norme ASTM D3493-2018 est de 97 ml/100g, l'indice d'adsorption d'iode mesuré selon la norme ASTM D1510-2017 est de 160 g/kg. | | | | |

Préparation des compositions de caoutchouc :
On procède pour les essais qui suivent à la préparation des compositions de caoutchouc de la manière suivante : on introduit dans un mélangeur interne, rempli à 70% en volume et dont la température initiale de cuve est d'environ 50°C, l'élastomère diénique, le noir de carbone à tester, la résine à tester et son durcisseur après une à deux minutes de malaxage, les divers autres ingrédients à l'exception du système de vulcanisation. On conduit alors un travail thermomécanique (phase non-productive) en une étape (durée totale du malaxage égale à environ 6 min), jusqu'à atteindre une température maximale de « tombée » d'environ 165°C.

On récupère le mélange ainsi obtenu, on le refroidit, puis on ajoute le système de vulcanisation (soufre et accélérateurs) sur un mélangeur externe (homo-finisseur) à 70°C, en mélangeant le tout (phase productive) pendant environ 5 à 6 min.

Les compositions ainsi obtenues sont ensuite calandrées soit sous la forme de plaques pour la mesure de leurs propriétés physiques ou mécaniques avant et après cuisson.

La réticulation (ou cuisson) des compositions de caoutchouc s'effectue à 150°C pendant 40 min sous pression.

Les propriétés mécaniques avant cuisson (indice Mooney) et celles après cuisson sont présentées dans le tableau 2.

**Tableau 2**

| | **T1** | **T2** | **T3** | **C1** |
|---|---|---|---|---|
| Indice Mooney (ML 1+4) en base 100 | 100 | 143 | 100 | 143 |
| Déformation rupture (DR) en base 100 | 100 | 98 | 100 | 107 |
| Contrainte rupture (CR) en base 100 | 100 | 102 | 100 | 111 |
| G* à 5% à 23°C en base 100 | 100 | 144 | 100 | 154 |
| tan (δ) max à 23°C en base 100 | 100 | 94 | 100 | 96 |

Les compositions T1, T2et T3 témoins ont un module dynamique de cisaillement G* de 25, 36 et 22 MPa. La composition C1 selon l'invention a un module dynamique de cisaillement G* de 34 MPa.

Les résultats présentés dans le tableau 2 ci-dessus montrent que la composition témoin T2 présente une amélioration significative de la rigidité (G* max à 23°C) tout en conservant de bonnes propriétés hystérétiques (tan (δ) max à 23°C) et de processabilité à cru, et sans modification substantielle de la cohésion du mélange (DR et CR) par rapport à la composition témoin T1. La composition de l'invention C1 présente également une amélioration significative de la rigidité par rapport à la composition témoin T3 tout en conservant de bonnes propriétés d'hystérèses et de processabilité à cru. Elle présente, en outre de manière surprenante, une amélioration significative des propriétés de cohésion. On notera également, que par rapport à la composition témoin T2, la composition C1 selon l'invention présente une amélioration du compromis de performance rigidité/hystérèse/cohésion du mélange.

### IV-3 : Essai de composition de caoutchouc

Les exemples présentés ci-dessous ont pour objet de comparer le compromis de performance entre la rigidité, l'hystérèse, et la cohésion d'une composition conforme à la présente invention (C2, C3, C4) avec trois compositions témoin (T4, T5 et T4) avec différents taux de noir de carbone.

Les compositions conformes à l'invention C2, C3 et C4 se distinguent des compositions témoins (T4, T5, T6) par le grade de noir de carbone utilisé.

Les taux des différents constituants des compositions sont présentés dans le tableau 3 et sont exprimés en pce (partie en poids pour cent parties en poids d'élastomère).

**[Tableau 3]**

| | **T4** | **C2** | **T5** | **C3** | **T6** | **C4** |
|---|---|---|---|---|---|---|
| Elastomère diénique⁽¹⁾ | 100 | 100 | 100 | 100 | 100 | 100 |
| ZnO ⁽²⁾ | 7,50 | 7,50 | 7,50 | 7,50 | 7,50 | 7,50 |
| Antioxydant⁽³⁾ | 2,66 | 2,66 | 2,66 | 2,66 | 2,66 | 2,66 |
| Acide stéarique | 0,80 | 0,80 | 0,80 | 0,80 | 0,80 | 0,80 |
| CBS⁽⁴⁾ | 3,20 | 3,20 | 3,20 | 3,20 | 3,20 | 3,20 |
| Soufre | 3,20 | 3,20 | 3,20 | 3,20 | 3,20 | 3,20 |
| Résine durcissante⁽⁷⁾ | 16.00 | 16.00 | 16.00 | 16.00 | 16.00 | 16.00 |
| Durcisseur⁽⁸⁾ | 7,46 | 7,46 | 7,46 | 7,46 | 7,46 | 7,46 |
| Noir de carbone⁽¹⁰⁾ | (-) | 50.00 | (-) | 62.50 | (-) | 75.00 |
| Noir de carbone⁽¹¹⁾ | 50.00 | (-) | 62.50 | (-) | 75.00 | (-) |

| | | | | | | |
|---|---|---|---|---|---|---|
| Les ingrédients 1, 2, 3, 4, 7, 8, 10 sont ceux utilisés à l'essai IV-2 11. Noir de carbone de grade ASTM N772 (ASTM D1565-14) commercialisé par la société Cabot ; Surface STSA mesurée selon la norme ASTM D6556-2016 est de 76 m²/g, l'indice COAN mesuré selon la norme ASTM D3493-2018 est de 68 ml/100g, l'indice d'adsorption d'iode mesuré selon la norme ASTM D1510-2017 est de 82 g/kg. | | | | | | |

Les compositions T4 à T6 et C2 à C4 sont préparées selon le protocole mentionné au paragraphe IV-2.

La réticulation (ou cuisson) des compositions de caoutchouc s'effectue à 150°C pendant 40 min sous pression.

Les propriétés mécaniques après cuisson sont présentées dans le tableau 4.

**Tableau 4**

| | **T4** | **C2** | **T5** | **C3** | **T6** | **C4** |
|---|---|---|---|---|---|---|
| Déformation rupture (DR) en base 100 | 100 | 102 | 100 | 106 | 100 | 103 |
| Contrainte rupture (CR) en base 100 | 100 | 125 | 100 | 115 | 100 | 105 |
| G* à 5% à 23°C en base 100 | 100 | 360 | 100 | 375 | 100 | 253 |
| tan (δ) max à 23°C en base 100 | 100 | 65 | 100 | 71 | 100 | 72 |

Les compositions T2, T5 et T6 ont un module dynamique de cisaillement G* respectivement de 5, 8 et 15 MPa. Les compositions C2, C3 et C4 selon l'invention ont un module de cisaillement G* respectivement de 18, 30 et 28 MPa.

Les résultats présentés dans le tableau 4 ci-dessus montrent que quand bien même les propriétés hystérétiques des compositions de l'invention sont un peu moins bonnes que celles des compositions témoins respectives, on observe pour tous les compositions de l'invention un grain très significatif des propriétés de rigidité aux faibles déformations ainsi qu'une amélioration signification des propriétés de cohésion. Les compositions selon l'invention présentent une amélioration du compromis de performance rigidité/hystérèse/cohésion du mélange.

## Revendications

1. Pneumatique (1), ayant un côté extérieur (E) et un côté intérieur (I), ledit pneumatique comprenant une armature de sommet (6) et une bande de roulement (5) radialement extérieure, ladite bande de roulement (5) comprenant une pluralité de blocs (51) de sculpture orientés au moins en partie circonférentiellement et une pluralité de rainures (71, 72, 73, 74) s'étendant au moins en partie circonférentiellement, chaque rainure circonférentielle (71, 72, 73, 74) étant délimitée par une face latérale axialement interne (7i), par une face latérale axialement externe (7e) et par un fond (7b) de rainure, au moins un desdits blocs de sculpture (51) comportant au moins un élément de renforcement circonférentiel (52) constitué d'une composition ayant un module dynamique de cisaillement G* au moins deux fois supérieur au module dynamique de cisaillement G* de la composition du reste des blocs de la bande de roulement, le module dynamique de cisaillement G* est mesuré à 23°C, et sous une contrainte de cisaillement alterné à une fréquence de 10 Hz et à 5% de déformation, l'élément de renforcement circonférentiel (52) ayant une largeur axiale qui diminue progressivement en se déplaçant radialement vers l'extérieur, ladite largeur axiale ayant une valeur maximale (520) inférieure à 40% de la largeur axiale (510) dudit bloc, **caractérisé en ce que** la composition dudit élément de renforcement circonférentiel (52) est à base d'au moins un élastomère diénique, une charge renforçante comprenant un noir de carbone présentant une surface spécifique STSA mesurée selon la norme D6556-2016 supérieure ou égale à 90 m²/g, une résine époxyde, un agent durcisseur aminé et un système de réticulation.

2. Pneumatique selon l'une quelconque des revendications précédentes, dans lequel ledit élément de renforcement circonférentiel (52) s'étend radialement sur une hauteur « h » correspondant de 50% à 100%, de préférence de 50% à 75%, de l'épaisseur « p » de la bande de roulement.

3. Pneumatique selon l'une quelconque des revendications précédentes, dans lequel ledit élément de renforcement circonférentiel (52) forme au moins en partie la face latérale axialement interne (7i) ou la face latérale axialement externe (7e) dudit au moins un desdits blocs de sculpture (51).

4. Pneumatique selon l'une quelconque des revendications précédentes, dans lequel l'élastomère diénique est choisi dans le groupe constitué par les polybutadiènes, le caoutchouc naturel, les polyisoprènes de synthèse, les copolymères de butadiènes, les copolymères d'isoprènes et les mélanges de ces élastomères.

5. Pneumatique selon l'une quelconque des revendications précédentes, dans lequel le noir de carbone présente une surface spécifique STSA comprise dans un domaine allant de 95 à 250 m²/g, de préférence allant de 100 à 190 m²/g, plus préférentiellement allant de 110 à 150 m²/g.

6. Pneumatique selon l'une quelconque des revendications précédentes, dans lequel le noir de carbone présente un indice COAN mesuré selon la norme ASTM D3493-2018 supérieur ou égal à 75 ml/100g, de préférence compris dans un domaine allant de 80 à 140 ml/100g, plus préférentiellement allant de 90 à 130 ml/100g.

7. Pneumatique selon l'une quelconque des revendications précédentes, dans lequel le noir de carbone présente un indice d'absorption d'iode mesuré selon la norme ASTM D1510-2017 supérieur ou égale à 100 g/kg, préférentiellement compris dans un domaine allant de 105 à 200 g/kg, plus préférentiellement allant de 115 à 170g/kg.

8. Pneumatique selon l'une quelconque des revendications précédentes, dans lequel le noir de carbone représente plus de 50 % en poids du poids de la charge renforçante.

9. Pneumatique selon l'une quelconque des revendications précédentes, dans lequel le taux de charge renforçante dans la composition dudit élément de renforcement circonférentiel (52) est compris dans un domaine allant de 20 à 200 pce, de préférence de 25 à 150 pce, plus préférentiellement de 30 à 100 pce.

10. Pneumatique selon l'une quelconque des revendications précédentes, dans lequel le taux de la résine époxyde est compris dans un domaine allant de 1 à 30 pce, plus préférentiellement allant 5 à 25 pce, plus préférentiellement allant de 8 à 20 pce.

11. Pneumatique selon l'une quelconque des revendications précédentes, dans lequel la résine époxyde est choisie dans le groupe constitué par les résines époxydes aromatiques, les résines novolaques alicycliques, les résines époxydes aliphatiques et leurs mélanges ; plus préférentiellement est une résine époxyde aromatique.

12. Pneumatique selon l'une quelconque des revendications précédentes, dans lequel la résine époxyde est une résine époxyde aromatique et est choisie dans le groupe constitué par le 2,2 bis[4-(glycidyloxy)phényl]propane, le poly[(o-cresylglycidyl) éther)-co-formaldéhyde], le poly[(phenylglycidyl éther)-co-formaldéhyde], le poly[(phenylglycidyl éther)-co(hydrocybenzaldéhyde glycidyl éther)] et leurs mélanges, plus préférentiellement la résine novolaque époxyde aromatique est choisie dans le groupe consititué par le poly[(o-cresylglycidyl) éther)-co-formaldéhyde] et le poly[(phenylglycidyl éther)-co-formaldéhyde] et leur mélange.

13. Pneumatique selon l'une quelconque des revendications précédentes, dans lequel le taux du durcisseur est compris dans un domaine allant de 1 à 15 pce, de préférence de 1 à 10 pce et plus préférentiellement de 2 à 8 pce.

14. Pneumatique selon l'une quelconque des revendications précédentes, dans lequel le durcisseur aminé est choisi dans le groupe constitué par les polyamines aliphatiques, les polyamines alicycliques, les polyamines aromatiques et leurs mélanges.

15. Pneumatique selon l'une quelconque des revendications précédentes, dans lequel la composition du reste de la bande de roulement a un module dynamique de cisaillement G* mesuré à 60°C à 10 Hz et sous une contrainte de cisaillement alternée de 0,7 MPa inférieur ou égal à 1,3 MPa, de préférence inférieur à 1,1 MPa.

## Patentansprüche

1. Reifen (1) mit einer Außenseite (E) und einer Innenseite (I), wobei der Reifen eine Scheitelbewehrung (6) und eine radial äußere Lauffläche (5) umfasst, die Lauffläche (5) mehrere Profilblöcke (51), die zumindest teilweise in Umfangsrichtung orientiert sind, und mehrere Rillen (71, 72, 73, 74) umfasst, die sich zumindest teilweise in Umfangsrichtung erstrecken, jede Umfangsrille (71, 72, 73, 74) durch eine axial innere Seitenfläche (7i), eine axial äußere Seitenfläche (7e) und einen Rillenboden (7b) begrenzt ist, mindestens einer der Profilblöcke (51) mindestens ein umlaufendes Verstärkungselement (52) aufweist, das aus einer Zusammensetzung mit einem dynamischen Schubmodul G* besteht, der mindestens zweimal größer als der dynamische Schubmodul G* der Zusammensetzung des Rests der Blöcke der Lauffläche ist, der dynamische Schubmodul G* bei 23 °C und unter einer Wechselschubspannung bei einer Frequenz von 10 Hz und einer Verformung von 5 % gemessen wird, das umlaufende Verstärkungselement (52) eine axiale Breite aufweist, die radial nach außen verlaufend allmählich abnimmt, wobei die axiale Breite einen Maximalwert (520) von weniger als 40 % der axialen Breite (510) des Blocks aufweist, **dadurch gekennzeichnet, dass** die Zusammensetzung des umlaufenden Verstärkungselements (52) auf mindestens einem Dienelastomer, einem verstärkenden Füllstoff, der einen Ruß umfasst, der eine gemäß der Norm D6556-2016 gemessene spezifische Oberfläche STSA von mehr als oder gleich 90 m²/g aufweist, einem Epoxidharz, einem aminhaltigen Härtungsmittel und einem Vernetzungssystem basiert.

2. Reifen nach einem der vorhergehenden Ansprüche, wobei sich das umlaufende Verstärkungselement (52) radial in einer Höhe "h" erstreckt, die 50 % bis 100 %, vorzugsweise 50 % bis 75 %, der Dicke "p" der Lauffläche entspricht.

3. Reifen nach einem der vorhergehenden Ansprüche, wobei das umlaufende Verstärkungselement (52) zumindest teilweise die axial innere Seitenfläche (7i) oder die axial äußere Seitenfläche (7e) des mindestens einen der Profilblöcke (51) bildet.

4. Reifen nach einem der vorhergehenden Ansprüche, wobei das Dienelastomer ausgewählt ist aus der Gruppe bestehend aus Polybutadienen, Naturkautschuk, synthetischen Polyisoprenen, Butadien-Copolymeren, Isopren-Copolymeren und Mischungen dieser Elastomere.

5. Reifen nach einem der vorhergehenden Ansprüche, wobei der Ruß eine spezifische Oberfläche STSA in einem Bereich von 95 bis 250 m²/g, vorzugsweise von 100 bis 190 m²/g, stärker bevorzugt von 110 bis 150 m²/g, aufweist.

6. Reifen nach einem der vorhergehenden Ansprüche, wobei der Ruß einen gemäß der Norm ASTM D3493-2018 gemessenen COAN-Index von größer als oder gleich 75 ml/100 g, vorzugsweise in einem Bereich von 80 bis 140 ml/100 g, stärker bevorzugt von 90 bis 130 ml/100 g, aufweist.

7. Reifen nach einem der vorhergehenden Ansprüche, wobei der Ruß eine gemäß der Norm ASTM D1510-2017 gemessene Iodabsorptionszahl von größer als oder gleich 100 g/kg, vorzugsweise in einem Bereich von 105 bis 200 g/kg, stärker bevorzugt von 115 bis 170 g/kg, aufweist.

8. Reifen nach einem der vorhergehenden Ansprüche, wobei der Ruß mehr als 50 Gew.-% des Gewichts des verstärkenden Füllstoffs darstellt.

9. Reifen nach einem der vorhergehenden Ansprüche, wobei der Anteil an verstärkendem Füllstoff in der Zusammensetzung des umlaufenden Verstärkungselements (52) in einem Bereich von 20 bis 200 phe, vorzugsweise von 25 bis 150 phe, stärker bevorzugt von 30 bis 100 phe, liegt.

10. Reifen nach einem der vorhergehenden Ansprüche, wobei der Gehalt an Epoxidharz in einem Bereich von 1 bis 30 phe, stärker bevorzugt von 5 bis 25 phe, stärker bevorzugt von 8 bis 20 phe, liegt.

11. Reifen nach einem der vorhergehenden Ansprüche, wobei das Epoxidharz ausgewählt ist aus der Gruppe bestehend aus aromatischen Epoxidharzen, alicyclischen Novolak-Harzen, aliphatischen Epoxidharzen und Mischungen davon; es stärker bevorzugt ein aromatisches Epoxidharz ist.

12. Reifen nach einem der vorhergehenden Ansprüche, wobei das Epoxidharz ein aromatisches Epoxidharz ist und ausgewählt ist aus der Gruppe bestehend aus 2,2-Bis[4-(glycidyloxy)phenyl]propan, Poly[(o-cresylglycidylether)-co-formaldehyd],
Poly[(phenylglycidylether)-co-formaldehyd],
Poly[(phenylglycidylether)-co(hydroxybenzaldehydglycidylether)] und Mischungen davon, stärker bevorzugt das aromatische Novolak-Epoxidharz ausgewählt ist aus der Gruppe bestehend aus Poly[(o-cresylglycidylether)-co-formaldehyd] und Poly[(phenylglycidylether)-co-formaldehyd] und einer Mischung davon.

13. Reifen nach einem der vorhergehenden Ansprüche, wobei der Gehalt an Härtungsmittel in einem Bereich von 1 bis 15 phe, vorzugsweise von 1 bis 10 phe und stärker bevorzugt von 2 bis 8 phe, liegt.

14. Reifen nach einem der vorhergehenden Ansprüche, wobei das aminhaltige Härtungsmittel ausgewählt ist aus der Gruppe bestehend aus aliphatischen Polyaminen, alicyclischen Polyaminen, aromatischen Polyaminen und Mischungen davon.

15. Reifen nach einem der vorhergehenden Ansprüche, wobei die Zusammensetzung des Rests der Lauffläche einen bei 60 °C bei 10 Hz und unter einer Wechselschubspannung von 0,7 MPa gemessenen dynamischen Schubmodul G* von kleiner als oder gleich 1,3 MPa, vorzugsweise weniger als 1,1 MPa, aufweist.

## Claims

1. Tyre (1), having an outer side (E) and an inner side (I), said tyre comprising a crown reinforcement (6) and a radially outer tread (5), said tread (5) comprising a plurality of tread pattern blocks (51) oriented at least partially circumferentially and a plurality of grooves (71, 72, 73, 74) extending at least partially circumferentially, each circumferential groove (71, 72, 73, 74) being delimited by an axially internal lateral face (7i), by an axially external lateral face (7e), and by a groove bottom (7b), at least one of said tread pattern blocks (51) having at least one circumferential reinforcing element (52) made of a composition having a dynamic shear modulus G* at least twice the dynamic shear modulus G* of the composition of the rest of the blocks of the tread, the dynamic shear modulus G* being measured at 23°C under an alternating shear stress at a frequency of 10 Hz and at 5% strain, the circumferential reinforcing element (52) having an axial width which decreases progressively within increasing radial proximity to the outside, said axial width having a maximum value (520) of less than 40% of the axial width (510) of said tread block, **characterized in that** the composition of said circumferential reinforcing element (52) is based on at least one diene elastomer, one reinforcing filler comprising a carbon black exhibiting an STSA specific surface area, measured according to the standard D6556-2016, of greater than or equal to 90 m²/g, one epoxy resin, one amine-comprising curing agent and one crosslinking system.

2. Tyre according to any one of the preceding claims, wherein said circumferential reinforcing element (52) extends radially over a height "h" corresponding to 50% to 100%, preferably 50% to 75%, of the thickness "p" of the tread.

3. Tyre according to either one of the preceding claims, wherein said circumferential reinforcing element (52) at least partially forms the axially internal lateral face (7i) or the axially external lateral face (7e) of said at least one of said tread pattern blocks (51).

4. Tyre according to any one of the preceding claims, wherein the diene elastomer is selected from the group consisting of polybutadienes, natural rubber, synthetic polyisoprenes, butadiene copolymers, isoprene copolymers and the mixtures of these elastomers.

5. Tyre according to any one of the preceding claims, wherein the carbon black exhibits an STSA specific surface area within a range from 95 to 250 m²/g, preferably within a range from 100 to 190 m²/g, more preferentially from 110 to 150 m²/g.

6. Tyre according to any one of the preceding claims, wherein the carbon black exhibits a COAN number, measured according to the standard ASTM D3493-2018, of greater than or equal to 75 ml/100 g, more preferentially within a range from 80 to 140 ml/100 g, more preferentially from 90 to 130 ml/100 g.

7. Tyre according to any one of the preceding claims, wherein the carbon black exhibits an iodine absorption number, measured according to the standard ASTM D1510-2017, of greater than or equal to 100 g/kg, more preferentially within a range from 105 to 200 g/kg, more preferentially from 115 to 170 g/kg.

8. Tyre according to any one of the preceding claims, wherein the carbon black represents more than 50% by weight of the weight of the reinforcing filler.

9. Tyre according to any one of the preceding claims, wherein the content of reinforcing filler in the composition of said circumferential reinforcing element (52) is within a range from 20 to 200 phr, preferably from 25 to 150 phr, more preferentially from 30 to 100 phr.

10. Tyre according to any one of the preceding claims, wherein the content of epoxy resin is within a range from 1 to 30 phr, more preferentially from 5 to 25 phr, more preferentially from 8 to 20 phr.

11. Tyre according to any one of the preceding claims, wherein the epoxy resin is selected from the group consisting of aromatic epoxy resins, alicyclic novolac resins, aliphatic epoxy resins, and mixtures of these; more preferentially, it is an aromatic epoxy resin.

12. Tyre according to any one of the preceding claims, wherein the epoxy resin is an aromatic epoxy resin and is selected from the group consisting of 2,2 bis[4-(glycidyloxy)phenyl]propane, poly[(o-cresyl glycidyl ether)-co-formaldehyde], poly[(phenyl glycidyl ether)-co-formaldehyde], poly[(phenyl glycidyl ether)-co-(hydroxybenzaldehyde glycidyl ether)], and mixtures of these, more preferentially the aromatic novolac epoxy resin is selected from the group consisting of poly[(o-cresyl glycidyl ether)-co-formaldehyde], poly[(phenyl glycidyl ether)-co-formaldehyde], and a mixture of these.

13. Tyre according to any one of the preceding claims, wherein the content of curing agent is within a range from 1 to 15 phr, preferably from 1 to 10 phr, and more preferentially from 2 to 8 phr.

14. Tyre according to any one of the preceding claims, wherein the amine-comprising curing agent is selected from the group consisting of aliphatic polyamines, alicyclic polyamines, aromatic polyamines, and mixtures of these.

15. Tyre according to any one of the preceding claims, wherein the composition of the rest of the tread has a dynamic shear modulus G*, measured at 60°C at 10 Hz and under an alternating shear stress of 0.7 MPa, of less than or equal to 1.3 MPa and preferably less than 1.1 MPa.
